# EUROPÄISCHE PATENTSCHRIFT

(11) **EP 4 227 116 B1**
(45) Veröffentlichungstag und Bekanntmachung des Hinweises auf die Patenterteilung: **13.11.2024**
(21) Anmeldenummer: 23150669.2
(22) Anmeldetag: 09.01.2023
(51) Int. Cl.: B60C 11/04, B60C 11/13, B60C 11/03

(54) **FAHRZEUGLUFTREIFEN**
PNEUMATIC TYRE FOR VEHICLES
PNEUMATIQUE POUR VÉHICULE

(30) Priorität: 14.02.2022 DE 102022201495
(43) Veröffentlichungstag der Anmeldung: 16.08.2023
(73) Patentinhaber: Continental Reifen Deutschland GmbH, 30175 Hannover (DE)
(72) Erfinder: Wanka, Thomas, 30165 Hannover (DE); Herbst, Stephan, 30165 Hannover (DE); Rittweger, Stefan, 30165 Hannover (DE)
(74) Vertreter: Continental Corporation

(56) Entgegenhaltungen:
- DE-A1- 102015 225 939
- DE-A1- 102019 111 997
- DE-A1- 102019 206 654
- DE-A1- 102019 208 593
- US-A1- 2019 023 077

## Beschreibung

Die Erfindung betrifft einen Fahrzeugluftreifen mit einem Laufstreifen mit zumindest einer durch eine Umfangsrille begrenzten schulterseitigen Profilrippe mit einem innerhalb der Bodenaufstandsfläche verlaufenden Rippeninnenabschnitt, einem außerhalb der Bodenaufstandsfläche verlaufenden Rippenaußenabschnitt und in einem Abstand vor der schulterseitigen Umfangsrille endenden Querrillen mit einer an der Laufstreifenperipherie in Umfangsrichtung ermittelten maximalen Breite von 5,0 mm bis 9,0 mm,
wobei jede Querrille eine erste Rillenwand, eine dieser gegenüberliegende zweite Rillenwand sowie eine erste und eine zweite Rillenkante aufweist,
wobei die Querrille entlang der ersten Rillenkante, angrenzend an die erste Rillenwand, eine im Rippeninnenabschnitt und im Rippenaußenabschnitt verlaufende, in Erstreckungsrichtung der Querrille langgestreckt dreieckförmige, fasenartige Erweiterung aufweist und
wobei im Rippeninnenabschnitt eine von der zweiten Rillenkante ausgehende, zur zweiten Rillenwand verlaufende, in Erstreckungsrichtung der Querrille langgestreckt dreieckförmige Schrägfläche ausgebildet ist.

Ein derartiger Fahrzeugluftreifen ist beispielsweise aus der DE 10 2019 206 654 A1 bekannt. Der Laufstreifen des Reifens weist eine schulterseitige Profilrippe mit mit Rillenkanten versehenen Querrillen mit einer an der Laufstreifenperipherie in Umfangsrichtung ermittelten maximalen Breite von 5,0 mm bis 7,0 mm auf, wobei eine über die eine Rillenkante verlaufende erste Schrägfläche und eine im Rippeninnenabschnitt von der anderen Rillenkante ausgehende langgestreckt dreieckförmige zweite Schrägfläche vorgesehen sind. Die erste Schrägfläche begrenzt eine langgestreckt dreieckförmige, fasenartige Erweiterung und weist laufstreifeninnenseitig einen dreieckigen Flächenauslauf auf. Die erste Schrägfläche und die zweite Schrägfläche sind "ineinander verschachtelt" ausgebildet, wobei die zweite Schrägfläche mit einem endseitigen Flächenabschnitt eine vom dreieckigen Flächenauslauf der ersten Schrägfläche ausgehende Stützfläche kontaktiert. Die Schrägflächen sollen eine Aufrechterhaltung guter Bremseigenschaften auf trockener Fahrbahn auch bei weiter fortschreitendem Abrieb ermöglichen.

Es ist üblich, schulterseitige Profilrippen von Laufstreifen mit Querrillen zu versehen, um die Entwässerung der Profilrippen zu ermöglichen. Schulterseitige Profilrippen mit laufstreifeninnenseitig innerhalb der Profilrippe endenden Querrillen weisen gegenüber schulterseitigen Profilrippen mit in die angrenzenden Umfangsrillen einmündenden Querrillen eine höhere Quer- und Umfangsteifigkeit auf, insbesondere im diesbezüglich kritischen, unmittelbar an die Umfangsrille angrenzenden Profilrippenabschnitt, wodurch die Kraftübertragung auf den Untergrund verbessert wird, was für die Trockenperformance des Reifens günstig ist. Ferner haben sich solche Profilrippen im Hinblick auf das Reifen-Fahrbahn-Geräusch sowie den Laufstreifenabrieb als vorteilhaft erwiesen.

Die US 2019/023077 A1 offenbart einen Fahrzeugluftreifen mit einem Laufstreifen mit innerhalb und außerhalb der Bodenaufstandsfläche verlaufenden Querrillen.

Bei dem aus der DE 10 2019 206 654 A1 bekannten Reifen ist der an die Umfangsrille angrenzende Profilrippenabschnitt durch die verschachtelten Schrägflächen in dieser Hinsicht bereits vorteilhaft ausgeführt, jedoch ist eine weitere Verbesserung im Hinblick auf die Nässeperformance mit Schwerpunkt auf die Nassgriffeigenschaften und das Aquaplaningverhalten wünschenswert.

Der Erfindung liegt daher die Aufgabe zugrunde, bei einem Fahrzeugluftreifen der eingangs genannten Art die Nässeperformance, insbesondere die Nassgriffeigenschaften und das Aquaplaningverhalten, unter Bedachtnahme auf die Bremseigenschaften auf trockener Fahrbahn weiter zu verbessern.

Gelöst wird die gestellte Aufgabe erfindungsgemäß dadurch, dass
dass sich die erste Rillenkante aus einem innenseitigen Kantenabschnitt, einem mittleren Kantenabschnitt und einem abschnittsweise im Rippeninnenabschnitt und abschnittsweise im Rippenaußenabschnitt verlaufenden, außenseitigen Kantenabschnitt zusammensetzt, wobei der mittlere Kantenabschnitt mit dem innenseitigen Kantenabschnitt an der der Querrille abgewandten Seite einen ersten stumpfen Winkel und mit dem außenseitigen Kantenabschnitt einen an der der Querrille zugewandten Seite einen zweiten stumpfen Winkel einschließt, wobei die fasenartige Erweiterung entlang des außenseitigen Kantenabschnittes und des mittleren Kantenabschnittes ausgebildet ist und eine an der Querrille liegende Dreieckbasis aufweist,
wobei die dreieckige Schrägfläche von einem die Dreieckbasis bildenden Abschnittteil der zweiten Rillenkante ausgeht und gemeinsam mit Wandabschnitten der zweiten Rillenwand einen vom laufstreifeninnenseitigen Ende der Querrille beabstandeten und die Querrille lokal verengenden, keilförmigen Vorsprung begrenzt.

Entsprechend der Kantenabschnitte der ersten Rillenkante setzt die fasenartige Erweiterung erst in einem Abstand zum laufstreifeninnenseitigen Ende der Querrille an, wobei der innenseitige Kantenabschnitt der ersten Rillenkante eine scharfe Nassgriffkante bildet, welche beim Fahren auf nasser Fahrbahn den sich auf der Rippenaußenfläche bildenden Wasserfilm wirkungsvoll aufbricht bzw. unterbricht. Die fasenartige Erweiterung wirkt einem Einrollen des mittleren Kantenabschnittes und des laufstreifenaußenseitigen Kantenabschnittes entgegen, was für die Bremseigenschaften auf trockener Fahrbahn vorteilhaft ist, stellt gleichzeitig zusätzliches Volumen für die Entwässerung der Profilrippe zur Verfügung und reduziert derart, insbesondere bei höherem Wasserstand auf der Straße, die Aquaplaninggefahr. Der Vorsprung stabilisiert gemeinsam mit seiner Schrägfläche die zweite Rillenkante sowie die zugehörige Rillenwand, wirkt somit in dieser Hinsicht versteifend, was für die Bremseigenschaften auf trockener Fahrbahn von Vorteil ist.

Gemäß einer bevorzugten Ausführung weist die Querrille einen Rillengrund mit einem laufstreifeninnenseitigen Grundabschnitt auf, welcher, im Längsschnitt durch die Querrille betrachtet, zur radialen Richtung unter einem Winkel von 60° bis 80° verläuft und derart geneigt ist, dass die Tiefe der Querrille über den laufstreifeninnenseitigen Grundabschnitt in Richtung Laufstreifeninnenseite kontinuierlich abnimmt, wobei der laufstreifeninnenseitige Grundabschnitt im Bereich des keilförmigen Vorsprunges endet. Dieser rampenartig verlaufende Grundabschnitt stabilisiert die Querrille zusätzlich und versteift die angrenzenden Bereiche der Profilrippe, was für die Bremseigenschaften auf trockener Fahrbahn günstig ist. Zusätzlich beschleunigt der Grundabschnitt die Ableitung von Wasser in Richtung Laufstreifenaußenseite, wodurch das Aquaplaningverhalten weiter verbessert ist.

Gemäß einer bevorzugten Ausführung weist die Querrille einen Rillengrund mit einem laufstreifeninnenseitigen Grundabschnitt auf, welcher, im Längsschnitt durch die Querrille betrachtet, zur radialen Richtung unter einem Winkel von 60° bis 80° verläuft und derart geneigt ist, dass die Tiefe der Querrille über den laufstreifeninnenseitigen Grundabschnitt in Richtung Laufstreifeninnenseite kontinuierlich abnimmt, wobei der laufstreifeninnenseitige Grundabschnitt im Bereich des keilförmigen Vorsprunges endet. Beim Fahren auf nasser Fahrbahn wird durch den laufstreifeninnenseitigen Grundabschnitt Wasser auf beschleunigte Weise am Vorsprung vorbei in Richtung Laufstreifenseite abgeleitet, wodurch die Nässeperformance weiter verbessert ist.

Nachfolgend wird auf eine Vielzahl bevorzugter Ausführungen und zu diesen gehörenden vorteilhaften Varianten eingegangen, wobei die Ausführungen Details der ersten Rillenkante und der an dieser ausgebildeten fasenartigen Erweiterung betreffen.

Eine bevorzugte Ausführung ist dadurch gekennzeichnet,
dass der vom mittleren Kantenabschnitt und dem innenseitigen Kantenabschnitt an der der Querrille abgewandten Seite eingeschlossene, erste stumpfe Winkel 150° bis 170° beträgt
   und/oder
dass der vom mittleren Kantenabschnitt und dem außenseitigen Kantenabschnitt an der der Querrille zugewandten Seite eingeschlossene, zweite stumpfen Winkel 150° bis 170° beträgt. Ein derart ausgeführte erste Rillenkante zeigt in Kombination mit der an ihr ausgebildeten fasenartigen Erweiterung eine besonders günstige Wirkung im Hinblick auf die Nassgriffeigenschaften und die Bremseigenschaften auf trockener Fahrbahn.

Die erwähnte Wirkung des innenseitigen Kantenabschnittes als Nassgriffkante ist besonders ausgeprägt, wenn der innenseitige Kantenabschnitt, in Draufsicht betrachtet, zur axialen Richtung unter einem Winkel von bis zu ± 2°, insbesondere von 0°, verläuft.

Bevorzugter Weise verläuft der mittlere Kantenabschnitt, in Draufsicht betrachtet, zur axialen Richtung unter einem Winkel von 10° bis 20°. Dies ist für die Griffwirkung auf nasser Fahrbahn, insbesondere bei gleichzeitigem Auftreten von Querkräften, von Vorteil.

Gemäß einer weiteren bevorzugten Ausführung verläuft der außenseitige Kantenabschnitt, in Draufsicht betrachtet, zur axialen Richtung unter einem Winkel von 0° bis 10°, wobei der außenseitige Kantenabschnitt zum mittleren Kantenabschnitt bezüglich der axialen Richtung vorzugsweise gegensinnig geneigt ist. Die geringe Neigung des außenseitigen Kantenabschnittes zur axialen Richtung unterstützt die Wasserableitung über die fasenartige Erweiterung in Richtung Laufstreifenaußenseite, was vor allem für das Aquaplaningverhalten günstig ist.

Eine weitere bevorzugte Ausführung ist dadurch gekennzeichnet, dass der innenseitige Kantenabschnitt eine in die axiale Richtung projizierte Länge von 25% bis 40%, insbesondere von bis zu 35%, der innerhalb der Bodenaufstandsfläche am Niveau der Laufstreifenperipherie ermittelten, in die axiale Richtung projizierten Länge der Querrille aufweist und
dass der mittlere Kantenabschnitt eine in die axiale Richtung projizierte Länge von 25% bis 40%, insbesondere von zumindest 30%, der innerhalb der Bodenaufstandsfläche am Niveau der Laufstreifenperipherie ermittelten, in die axiale Richtung projizierten Länge der Querrille aufweist.

Der innenseitige Kantenabschnitt bildet die bereits erwähnte Nassgriffkante, wobei die angegeben Länge deren erläuterte Wirkungsweise weiter begünstigt. Der mittlere Kantenabschnitt sorgt für eine Verbreiterung der fasenartigen Erweiterung in Richtung Laufstreifenaußenseite, wobei die bevorzugte Länge die Entwässerung über die fasenartige Erweiterung weiter verbessert und derart die Aquaplaninggefahr weiter reduziert ist.

Eine weitere bevorzugte Ausführung ist dadurch gekennzeichnet,
a) dass die fasenartige Erweiterung von einer an den außenseitigen Kantenabschnitt anschließenden Schrägfläche und einer vom mittleren Kantenabschnitt ausgehenden Seitenfläche begrenzt ist, wobei die Schrägfläche entlang der Seitenfläche ausläuft und wobei die Seitenfläche, im in Draufsicht in Umfangsrichtung ausgerichteten Querschnitt betrachtet, zur radialen Richtung unter einem Winkel von vorzugsweise 2° bis 6°, insbesondere von 3° bis 5, verläuft, oder
b) dass die fasenartige Erweiterung von einer sowohl an den außenseitigen Kantenabschnitt als auch an mittleren Kantenabschnitt anschließenden Schrägfläche begrenzt ist.

Bei Variante a) bildet der mittlere Kantenabschnitt durch die an ihn anschließende steile Seitenfläche eine weitere scharfe Nassgriffkante, welche die bereits erwähnte Funktion des innenseitige Kantenabschnittes, nämlich das Aufbrechen bzw. Unterbrechen des sich beim Fahren auf nasser Fahrbahn auf der Rippenaußenfläche bildenden Wasserfilms, unterstützt. Variante a) ist daher vor allem für den Nassgriffeigenschaften von besonderem Vorteil.

Bei Variante b) ist der Fasencharakter der fasenartigen Erweiterung verstärkt, wodurch diese Variante im Hinblick auf die Bremseigenschaften auf trockener Fahrbahn weiter verbessert ist.

Bei Variante a) ist es bevorzugt, wenn die Schrägfläche an ihrem sowohl an der Seitenfläche als auch an der ersten Rillenwand liegendem Ende in eine in radialer Richtung ermittelte Tiefe von 1,0 mm bis 2,0 mm reicht. Die Wirkung der fasenartigen Erweiterung im Hinblick auf die Bremseigenschaften auf trockener Fahrbahn bleibt somit über einen entsprechenden Laufstreifenabrieb erhalten.

Eine vor allem für die Bremseigenschaften auf trockener Fahrbahn vorteilhafte Weiterbildung der zuletzt genannten bevorzugte Ausführung besteht darin,
c) dass die Schrägfläche, im in Umfangsrichtung ausgerichteten Querschnitt betrachtet, zur radialen Richtung unter einem Winkel von 20° bis 40°, insbesondere von 25° bis 35°, verläuft,
   und/oder
d) dass die Schrägfläche, im in Umfangsrichtung ausgerichteten Querschnitt betrachtet, eine Breite aufweist, welche am gegenseitigen Anschluss des außenseitigen Kantenabschnittes und des mittleren Kantenabschnittes ihren größten Wert von 1,5 mm bis 3,0 mm, insbesondere von 2,0 mm bis 2,5 mm, aufweist.

Anschließend wird auf einige mit dem Vorsprung im Zusammenhang stehende bevorzugte Ausführungen und zu diesem gehörende vorteilhafte Varianten eingegangen.

Gemäß einer ersten solchen bevorzugten Ausführung weist der keilförmige Vorsprung am gegenseitigen Anschluss der ihn mitbegrenzenden Wandabschnitte der zweiten Rillenwand eine Vorsprungkante auf, an welcher die Querrille eine zwischen den Rillenwänden in Umfangsrichtung als kleinstmöglichen Abstand ermittelte Breite von zumindest 1,0 mm, bevorzugt von bis zu 4,0 mm, besonders bevorzugt von 1,5 mm bis 3,0 mm, aufweist. Durch diese Ausgestaltung ist die Wasserableitung durch die Querrille hindurch weiter verbessert. Wie erläutert, wird das Wasser im Bereich des als Nassgriffkante wirkenden innseitigen Kantenabschnittes aufgebrochen bzw. unterbrochen, fließt nachfolgend in den laufstreifeninnseitigen Bereich der Querrille ein und wird entlang des keilförmigen Vorsprunges Richtung Laufstreifenaußenseite geleitet. Die Ausführung verbessert daher vor allem die Aquaplaningeigenschaften weiter.

Eine weitere bevorzugte Ausführung ist dadurch gekennzeichnet, dass der keilförmige Vorsprung am Anschluss seiner dreieckigen Schrägfläche an die ihn mitbegrenzenden Wandabschnitte jeweils eine Vorsprungkante aufweist, wobei diese Vorsprungkanten, in Draufsicht betrachtet, miteinander einen Winkel von 150° bis 160° einschließen. Der Winkel steht in unmittelbaren Zusammenhang mit der Keilform des Vorsprunges. Ein solcher Vorsprung lässt sich auf zumindest im Wesentlichen verwirbelungsfreie Weise von in der Querrille in Richtung Laufstreifenaußenseite fließendem Wasser umströmen und trägt somit zu einer weiteren Reduktion der Aquaplaninggefahr bei.

Eine weitere bevorzugte Ausführung ist dadurch gekennzeichnet, dass die dreieckige Schrägfläche, welche gemeinsam mit den Wandabschnitten der zweiten Rillenwand den keilförmigen Vorsprung begrenzt,
- am die Dreieckbasis der Schrägfläche bildenden Abschnittteil der zweiten Rillenkante eine in die axiale Richtung projizierte Länge von 50% bis 70%, insbesondere von 55% bis 65% der innerhalb der Bodenaufstandsfläche, am Niveau der Laufstreifenperipherie ermittelten, in die axiale Richtung projizierten Länge der Querrille aufweist,
   und/oder
- im in Umfangsrichtung ausgerichteten Querschnitt betrachtet, zur radialen Richtung unter einem Winkel von 40° bis 50° verläuft
   und/oder
- in radialer Richtung bis in eine Tiefe von 0,7 mm bis 1,5 mm reicht.

Die erwähnte Länge und der erwähnte Winkel sind vor allem für die oben erwähnte stabilisierende Wirkung des Vorsprunges auf die zweite Rillenkante sowie die zugehörige Rillenwand und somit für die Bremseigenschaften auf trockener Fahrbahn vorteilhaft. Die angegebene Tiefe ist insbesondere im Hinblick auf die Wirkung der Schrägfläche für die Bremseigenschaften auf trockener Fahrbahn günstig.

Bei den beiden letztgenannten bevorzugten Ausführungen ist es von Vorteil, wenn die Vorsprungkante, welche der Vorsprung an jenem Wandabschnitt aufweist, welcher dem seitlichen Rand der Bodenaufstandsfläche zugewandt ist, in Draufsicht eine in die axiale Richtung projizierte Länge von 70% bis 90%, insbesondere von zumindest 80%, der in die axiale Richtung projizierten Länge der Schrägfläche aufweist. Der Vorsprung und dessen Schrägfläche sind daher in Draufsicht im Hinblick auf die Dreieckform in axialer Richtung asymmetrisch langgestreckt (kein gleichschenkeliges Dreieck). Dies ist vor allem für den Wasserfluss durch die Querrille in Richtung Laufstreifenaußenseite günstig.

Eine weitere bevorzugte Ausführung ist dadurch gekennzeichnet, dass die Querrille eine an die zweite Rillenwand angrenzende, zumindest Großteils im Rippenaußenabschnitt ausgebildete und zumindest bis zum Rippeninnenabschnitt reichende, in Erstreckungsrichtung der Querrille langgestreckt dreieckförmige, oberflächliche Ausnehmung aufweist, welche durch eine von der zweiten Rillenkante ausgehende Seitenfläche und einen langgezogen dreieckförmigen, in Richtung Laufstreifeninnseite kontinuierlich schmäler werdenden, auslaufenden Boden mit einer Bodenkante an der Rillenwand begrenzt ist, wobei die Ausnehmung eine entlang der Bodenkante senkrecht gegenüber dem Niveau der Laufstreifenperiphere ermittelte, in Richtung Laufstreifenaußenseite abnehmende Tiefe aufweist.

Je nach der Ausgestaltung der oberflächlichen Ausnehmung befindet sich diese im üblichen Fahrbetrieb außerhalb des Footprints oder reicht geringfügig in den Footprint hinein, wobei die Ausnehmung ein für die Entwässerung vorteilhaftes, zusätzliches Wasserreservoir zur Verfügung stellt. Unter dem beim Fahren von Kurven auftretendem Lastwechsel verlagert sich der Footprint in der entsprechenden Reifenschulter in Richtung Laufstreifenaußenseite, wodurch der aufgrund der abnehmenden Tiefe der Ausnehmung besonders steife Bereich der schulterseitigen Profilrippe mit den Untergrund in Kontakt tritt, was für die Bodenhaftung vorteilhaft ist. Die in Richtung Laufstreifenaußenseite zunehmende Breite des Bodens ist für den Entwässerungseffekt der Ausnehmung vorteilhaft, da in dieser Hinsicht ein gewisser Ausgleich zur abnehmenden Tiefe der Ausnehmung erzielt wird.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Umfangsabschnitt einer schulterseitigen Profilrippe eines in die Ebene abgewickelten Laufstreifens eines Fahrzeugluftreifens mit einer Ausführungsvariante der Erfindung,
Fig. 2 einen Schnitt entlang der Linie II-II der Fig. 1,
Fig. 3 eine vergrößerte Draufsicht auf das Detail Z₃ der Fig. 1,
Fig. 4 einen Schnitt entlang der Linie IV-IV der Fig. 3,
Fig. 5 einen Schnitt entlang der Linie V-V der Fig. 3,
Fig. 6 einen Schnitt entlang der Linie VI-VI der Fig. 3,
Fig. 7 einen Schnitt entlang der Linie VII-VII der Fig. 3,
Fig. 8 einen Schnitt entlang der Linie VIII-VIII der Fig. 3,
Fig. 9 eine Ansicht gemäß der in Fig. 3 durch den Pfeil S₉ angedeuteten Sichtrichtung unter Berücksichtigung der Reifenkrümmung,
Fig. 10 eine Ansicht gemäß der in Fig. 3 durch den Pfeil S₁₀ angedeuteten Sichtrichtung unter Berücksichtigung der Reifenkrümmung, wobei die Profilrippe aufgeschnitten ist und
Fig. 11 eine Ansicht gemäß der in Fig. 3 durch den Pfeil S₁₁ angedeuteten Sichtrichtung unter Berücksichtigung der Reifenkrümmung, wobei die Profilrippe aufgeschnitten ist.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Kleintransporter mit zGM ≤ 3,5 t, Leichte LKWs mit zGM ≤ 7,5 t).

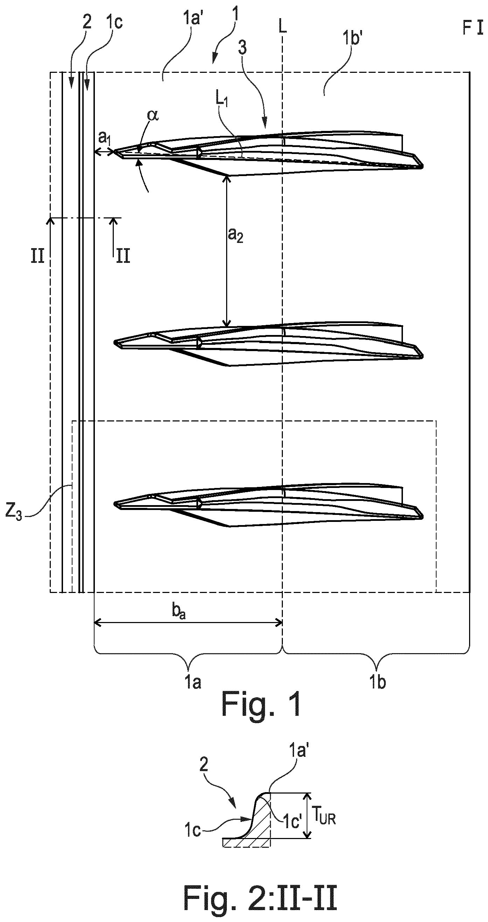

Fig. 1 zeigt eine Draufsicht auf einen Umfangsabschnitt einer schulterseitigen Profilrippe 1 eines Laufstreifens eines Fahrzeugluftreifens. Der seitliche Rand der Bodenaufstandsfläche des Laufstreifens ist in Fig. 1 durch eine gestrichelte Linie L gekennzeichnet, wobei die Bodenaufstandsfläche dem statisch ermittelten Footprint gemäß E.T.R.T.O.-Standards entspricht (Last bei 70 % der maximalen Tragfähigkeit bei einem Innendruck von 85 % nach E.T.R.T.O.-Norm). Der Laustreifen weist in seiner zweiten, nicht gezeigten Schulter eine weitere schulterseitige Profilrippe auf, deren Ausgestaltung von jener der schulterseitigen Profilrippe 1 vorzugsweise abweicht, sodass der Laufstreifen bezüglich der Reifenäquatorialebene eine asymmetrische Gestalt aufweist. Ein solcher Fahrzeugluftreifen wird bevorzugt derart auf der Achse eines Fahrzeuges, etwa einem PKW, montiert, dass die schulterseitige Profilrippe 1 der Fahrzeuginnenseite FI zugewandt ist.

Die schulterseitige Profilrippe 1 ist laufstreifeninnenseitig von einer beim gezeigten Ausführungsbeispiel in Draufsicht gerade verlaufenden, schulterseitigen Umfangsrille 2 begrenzt, welche in radialer Richtung auf die jeweils vorgesehene Profiltiefe T_{UR} (Fig. 2) ausgeführt ist, wobei die Profiltiefe T_{UR} für den bevorzugten Reifentyp üblicherweise 6,5 mm bis 13,0 mm, insbesondere bis zu 10,0 mm, beträgt.

Die schulterseitige Profilrippe 1 weist einen innerhalb der Bodenaufstandsfläche befindlichen Rippeninnenabschnitt 1a mit einer in der Laufstreifenperipherie liegenden Außenfläche 1a', einen außerhalb der Bodenaufstandsfläche befindlichen, zur nicht gezeigten Seitenwand verlaufenden Rippenaußenabschnitt 1b mit einer in der Laufstreifenperipherie liegenden Außenfläche 1b' auf und ist zur schulterseitigen Umfangsrille 2 durch eine Rippenflanke 1c begrenzt. Der Rippeninnenabschnitt 1a weist eine am Niveau der Außenfläche 1a' in axialer Richtung ermittelte Breite bₐ auf. Gemäß Fig. 2 weist die Rippenflanke 1c beim gezeigten Ausführungsbeispiel eine radial äußere Übergangsrundung 1c' auf, welche, im in Draufsicht in axialer Richtung ausgerichteten Querschnitt betrachtet (vergl. Lage der Linie II-II in Fig. 1), tangential ("knickfrei") in die Außenfläche 1a' übergeht.

Gemäß Fig. 1 ist die schulterseitige Profilrippe 1 über ihre Umfangserstreckung mit einer Vielzahl von innerhalb der schulterseitigen Profilrippe 1 endenden Querrillen 3 versehen, welche jeweils abschnittsweise im Rippeninnenabschnitt 1a und abschnittsweise im Rippenaußenabschnitt 1b verlaufen, der schulterseitigen Profilrippe 1 eine blockartige Struktur verleihen, vor der schulterseitigen Umfangsrille 2 in einem an der Außenfläche 1a' in axialer Richtung ermittelten Abstand a₁ von vorzugsweise 2,0 mm von 15,0 mm, insbesondere von 4,0 mm bis 10,0 mm, enden und - in Draufsicht betrachtet sowie bezogen auf entlang der jeweils größten Rillenlänge ausgerichtete, gerade verlaufende Linien L₁ - zur axialen Richtung unter einem Winkel α von 0° bis 20°, insbesondere von bis zu 15°, besonders bevorzugt von bis zu 7°, sowie vorzugsweise parallel zueinander verlaufen. In Umfangsrichtung unmittelbar aufeinanderfolgende Querrillen 3 weisen voneinander an der Außenfläche 1a' in Umfangsrichtung als kleinstmögliche Abstände ermittelte Abstände a₂ von vorzugsweise 15,0 mm von 35,0 mm auf.

Die weitere Ausgestaltung der Querrillen 3 wird nachfolgend anhand einer einzelnen Querrille 3 erläutert.

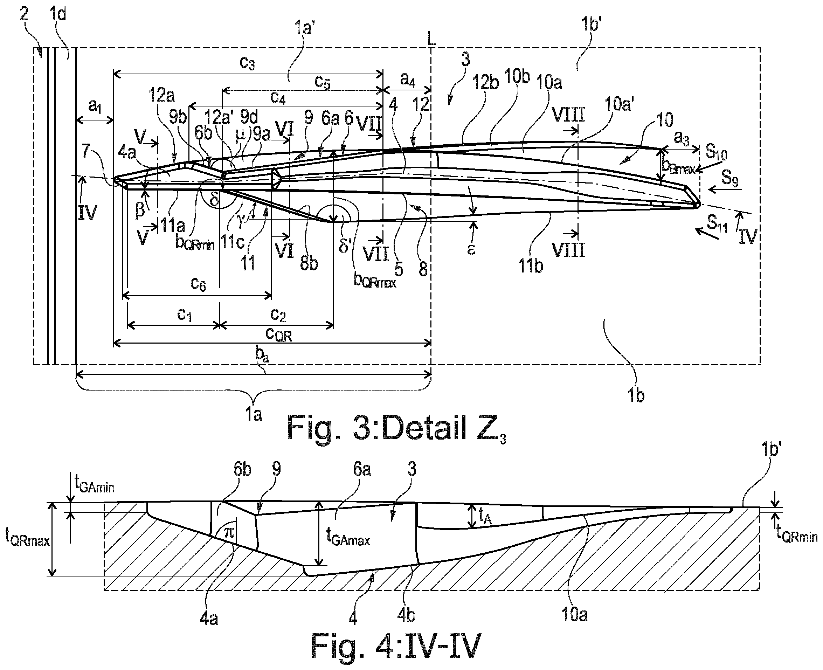

Die Querrille 3 weist eine am Niveau der Außenfläche 1a' ermittelte, vom erwähnten Abstand a₁ abhängige, in die axiale Richtung projizierte Länge c_{QR} (Fig. 3) und in radialer Richtung eine maximale Tiefe t_{QRmax} (Tiefe an der tiefsten Stelle, Fig. 4) von 70% bis 100% der Profiltiefe T_{UR} (Fig. 2) auf, wobei die Querrille 3 ausgehend von der tiefsten Stelle in insbesondere bekannter Weise zu ihrem laufstreifenaußenseitigen Ende kontinuierlich seichter wird und am laufstreifenaußenseitigen Ende eine minimale Tiefe t_{QRmin} (Fig. 4) von höchstens 1,0 mm, insbesondere von höchstens 0,5 mm, aufweist. Alternativ kann die Querrille 3 laufstreifenaußenseitig zur Außenfläche 1b' (Fig. 3) auslaufen.

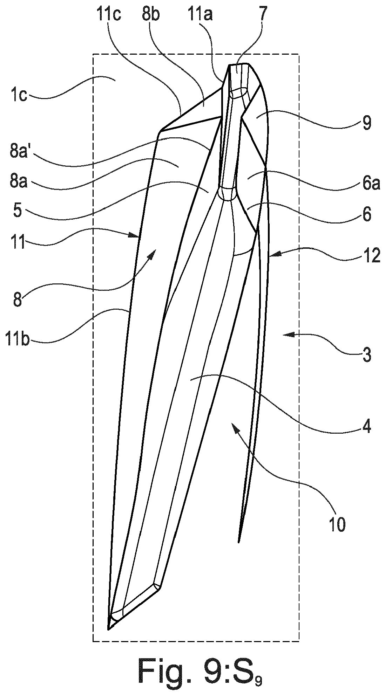

Wie Fig. 3 und Fig. 9 zeigen, weist die Querrille 3 einen Rillengrund 4, zwei Rillenwände 5, 6, an ihrem laufstreifeninnenseitigen Ende eine Endflanke 7, eine an die Rillenwand 5 angrenzende, sowohl im Rippeninnenabschnitt 1a (Fig. 3) als auch im Rippenaußenabschnitt 1b (Fig. 3) ausgebildete, in Draufsicht in Erstreckungsrichtung der Querrille 3 langgestreckt dreieckförmige, fasenartige Erweiterung 8, einen von der Rillenwand 6 mitbegrenzten, im Rippeninnenabschnitt 1a (Fig. 3) befindlichen, die Querrille 3 lokal verengenden, in Draufsicht in Erstreckungsrichtung der Querrille 3 langgestreckt dreieckförmig, insgesamt keilförmigen Vorsprung 9 und eine an die Rillenwand 6 angrenzende, Großteils im Rippenaußenabschnitt 1b (Fig. 3) ausgebildete und in den Rippeninnenabschnitt 1a (Fig. 3) reichende, in Draufsicht in Erstreckungsrichtung der Querrille 3 langgestreckt dreieckförmige, oberflächliche Ausnehmung 10 auf.

Die Querrille 3 ist an der Laufstreifenperipherie durch eine zweifach geknickte Rillenkante 11, an welcher die fasenartige Erweiterung 8 ausgebildet ist, und eine Rillenkante 12, entlang welcher der Vorsprung 9 und die Ausnehmung 10 ausgebildet sind, begrenzt. Die nachfolgenden Ausführungen zu den Rillenkanten 11, 12 beziehen sich auf die Draufsicht.

Gemäß Fig. 3 setzt sich die Rillenkante 11 aus einem an der Außenfläche 1a' befindlichen, innenseitigen Kantenabschnitt 11a, einem an der Außenfläche 1a' befindlichen, mittleren Kantenabschnitt 11c und einem abschnittsweise an der Außenfläche 1a' und abschnittsweise an der Außenfläche 1b' befindlichen, außenseitigen Kantenabschnitt 11b zusammen. Der innenseitige Kantenabschnitt 11a weist eine in die axiale Richtung projizierte Länge c₁ von 25% bis 40%, insbesondere von bis zu 35%, der Länge c_{QR} auf und verläuft gerade sowie zur axialen Richtung unter einem Winkel β von bis zu ± 2°, insbesondere von 0°. Der mittlere Kantenabschnitt 11c weist eine in die axiale Richtung projizierte Länge c₂ von 25% bis 40%, insbesondere von zumindest 30%, der Länge c_{QR} auf, verläuft gerade sowie zur axialen Richtung unter einem Winkel γ von 10° bis 20° und schließt mit dem innenseitigen Kantenabschnitt 11a an der der Querrille 3 abgewandten Seite einen stumpfen Winkel δ ein. Der außenseitige Kantenabschnitt 11b verläuft, insbesondere bedingt durch die gekrümmte Reifenaußenkontur, zumindest abschnittsweise leicht bogenförmig sowie an der Außenfläche 1a' zur axialen Richtung unter einem Winkel ε von 0° bis 10°, insbesondere von bis zu 5°, ist zum mittleren Kantenabschnitt 11c bezüglich der axialen Richtung vorzugsweise gegensinnig geneigt und schließt mit dem mittleren Kantenabschnitt 11c an der der Querrille 3 zugewandten Seite einen stumpfen Winkel δ' (Fig. 3) ein. Die stumpfen Winkel δ, δ' betragen vorzugsweise jeweils 150° bis 170°.

Die Rillenkante 12 setzt sich aus einem an der Außenfläche 1a' befindlichen, leicht bogenförmig verlaufenden, innenseitigen Kantenabschnitt 12a mit einer in die axiale Richtung projizierten Länge c₃ von 80% bis 90% der Länge c_{QR} und einem abschnittsweise an der Außenfläche 1a' und abschnittsweise an der Außenfläche 1b' befindlichen, leicht bogenförmig verlaufenden, außenseitigen Kantenabschnitt 12b, welcher laufstreifenaußenseitig in einem quer zur Umfangsrichtung am Niveau der Außenfläche 1b' ermittelten Abstand as von bis zu 10,0 mm, insbesondere von bis zu 3,5 mm, vor dem Ende der Querrille 3 endet, zusammen. Die erwähnte Länge c₃ des innenseitigen Kantenabschnittes 12a und der erwähnte Abstand a₁ sind vorzugsweise derart aufeinander abgestimmt, dass die Kantenabschnitte 12a, 12b an ihrem gegenseitigen Anschluss zum seitlichen Rand der Bodenaufstandsfläche in axialer Richtung einen Abstand a₄ von zumindest 3,0 mm aufweisen.

Die Querrille 3 weist eine an der Außenfläche 1a', in Umfangsrichtung ermittelte maximale Breite b_{QRmax} von 5,0 mm bis 9,0 mm, insbesondere von 6,5 mm bis 7,0 mm, auf, wobei die Stelle der maximalen Breite b_{QRmax} beim gezeigten Ausführungsbeispiel am gegenseitigen Anschluss des Kantenabschnittes 11b an den Kantenabschnitt 11c vorliegt. Die maximale Breite b_{QRmax} ist daher im Rippeninnenabschnitt 1a sowie an der Laufstreifenperipherie ermittelt, wobei die genaue Lage der maximalen Breite b_{QRmax} von der erwähnten Lage abweichen kann und wobei die maximale Breite b_{QRmax} auch über einen in Fig. 3 nicht bezeichneten Abschnitt der Querrille 3 vorhanden sein kann.

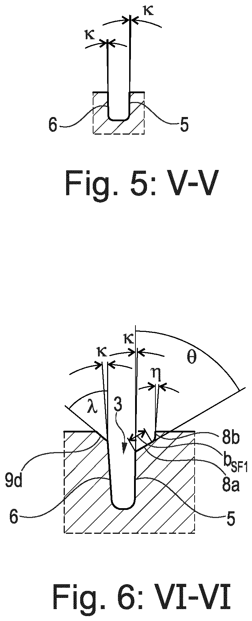

Wie Fig. 5 bis Fig. 7 zeigen, verlaufen die Rillenwände 5, 6, im in Draufsicht in Umfangsrichtung ausgerichteten Querschnitt betrachtet (vergl. Lage der Linien V-V, VI-VI, VII-VII in Fig. 3), zur radialen Richtung unter einem Winkel κ von 0° bis 6°, insbesondere von bis zu 5°, wobei der Winkel κ konstant ist oder in verschiedenen Bereichen der Querrille 3 unterschiedliche Größen aufweisen kann. Beispielsweise kann die Größe des Winkels κ der Rillenwand 6 im Bereich des Vorsprunges 9 von der Größe des Winkels κ der Rillenwand 6 im Bereich außerhalb des Vorsprunges 9 abweichen.

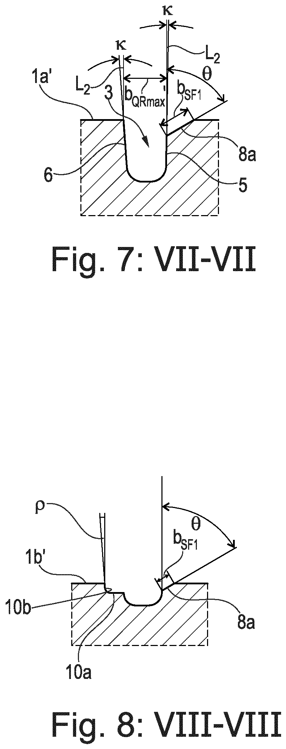

Wie Fig. 7 zeigt, weist die Querrille 3 im Rippeninnenabschnitt 1a, im in Draufsicht in Umfangsrichtung ausgerichteten Querschnitt betrachtet, eine maximale Rillenbreite b_{QRmax}' von 2,0 mm bis 6,0 mm, insbesondere von 2,5 mm bis 5,5 mm, auf (vergl. Lage der Linie VII-VII in Fig. 3), welche als kleinstmöglicher Abstand zwischen zwei in radialer Richtung durch die radial äußeren Enden der Rillenwände 5, 6 verlaufenden Linien L₂ ermittelt ist. Bei der Ermittlung der maximale Rillenbreite b_{QRmax}' bleiben daher die Erweiterung 8, der Vorsprung 9 und die Ausnehmung 10 unberücksichtigt.

Gemäß Fig. 4 setzt sich der Rillengrund 4, im Längsschnitt durch die Querrille 3 betrachtet (vergl. Lage der Linie IV-IV in Fig. 3), aus einem laufstreifeninnenseitigen Grundabschnitt 4a und einem laufstreifenaußenseitigen Grundabschnitt 4b zusammen. Der laufstreifeninnenseitige Grundabschnitt 4a verläuft, im erwähnten Längsschnitt betrachtet, zur radialen Richtung unter einem konstanten Winkel π von 60° bis 80°, wobei er derart geneigt ist, dass die Tiefe der Querrille 3 im Bereich des Grundabschnittes 4a zur Endflanke 7 (Fig. 3) kontinuierlich abnimmt. Der Grundabschnitt 4a schließt laufstreifeninnenseitig in einer in radialer Richtung ermittelten Tiefe t_{GAmin} (in Fig. 4 angedeutet) von 0,8 mm bis 1,5 mm an die Endflanke 7 (Fig. 3) an, endet laufstreifenaußenseitig im Bereich des Vorsprunges 9 sowie in einer in radialer Richtung ermitteln Tiefe t_{GAmax} und weist, in Draufsicht betrachtet, eine in die axiale Richtung projizierte Länge c₆ (Fig. 3) 40% bis 60% der Länge c_{QR} auf. Der Winkel π, die Länge c₆ und die Tiefe t_{GAmin} sind bevorzugt derart aufeinander abgestimmt, dass die Tiefe t_{GAmax} der um 0,5 mm bis 1,5 mm verringerten maximalen Tiefe t_{QRmax} der Querrille 3 beträgt.

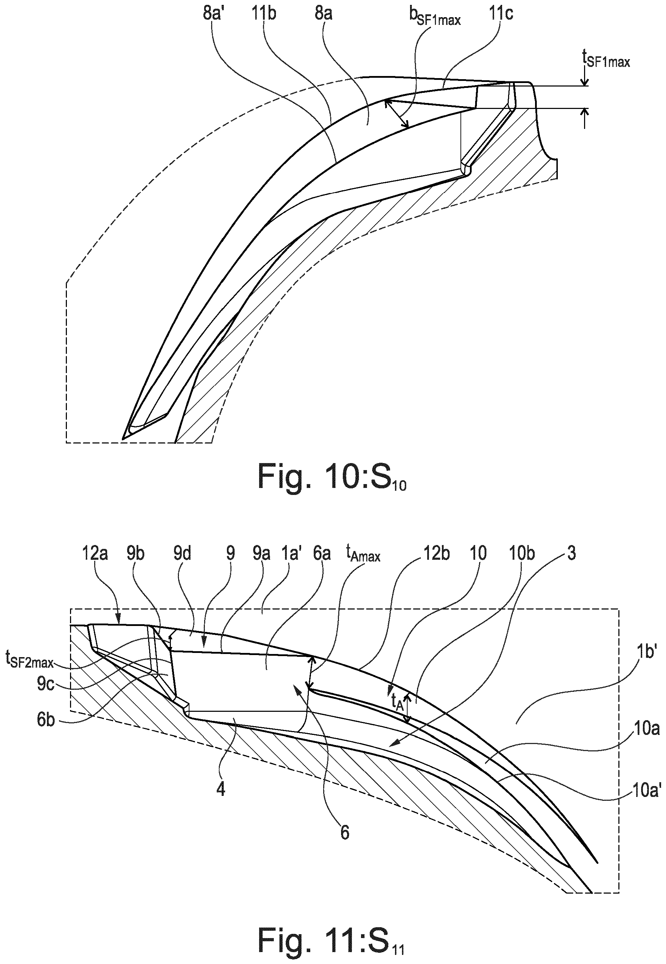

Gemäß Fig. 9 ist fasenartige Erweiterung 8 entlang des außenseitigen Kantenabschnittes 11b und des mittleren Kantenabschnittes 11c ausgebildet, weist eine an der Querrille 3 liegende Dreieckbasis (längste Seite des Dreieckes) auf und ist in radialer Richtung durch eine vom außenseitigen Kantenabschnitt 11b ausgehende, zur Rillenwand 5 reichende Schrägfläche 8a sowie ferner durch eine vom mittleren Kantenabschnitt 11c ausgehende, zur Rillenwand 5 reichende Seitenfläche 8b begrenzt. Die Seitenfläche 8b verläuft, im in Draufsicht in Umfangsrichtung ausgerichteten Querschnitt betrachtet, zur radialen Richtung unter einem Winkel η (Fig. 6, vergl. Lage der Linie VI-VI in Fig. 3) von 2° bis 6°, insbesondere von 3° bis 5°. Die Schrägfläche 8a ist außenseitig entlang des Rillengrundes 4 fortgeführt, weist eine an der Rillenwand 5 liegende, ebenfalls entlang des Rillengrundes 4 fortgeführte, radial innere Begrenzungskante 8a' auf, verläuft, im in Draufsicht in Umfangsrichtung ausgerichteten Querschnitt betrachtet, zur radialen Richtung unter einem Winkel θ (Fig. 6 bis Fig. 8, vergl. Lage der Linien VI-VI, VII-VII und VIII-VIII in Fig. 3) von 20° bis 40°, insbesondere von 25° bis 35°, wobei der Winkel θ konstant ist oder über die Erstreckung der Schrägfläche 8a um bis zu 2° variiert, und weist ferner, im erwähnten Querschnitt betrachtet, eine Breite b_{SF1} (Fig. 6 bis Fig. 8) auf, welche am gegenseitigen Anschluss des außenseitigen Kantenabschnittes 11b und des mittleren Kantenabschnittes 11c ihren größten Wert b_{SF1max} (andeutet in Fig. 10) von 1,5 mm bis 3,0 mm, insbesondere von 2,0 mm bis 2,5 mm, aufweist. Gemäß Fig. 10 reicht die Schrägfläche 8a am an der Seitenfläche 11c liegenden laufstreifeninnenseitigen Ende der radial inneren Begrenzungskante 8a' in eine in radialer ermittelte Tiefe t_{SF1max} von vorzugsweise 1,0 mm bis 2,0 mm.

Gemäß Fig. 3 ist der von der Rillenwand 6 mitbegrenzte, keilförmige Vorsprung 9 von der Endflanke 7 und vom seitlichen Rand der Bodenaufstandsfläche (Linie L) beabstandet, wobei der Vorsprung 9 - wie insbesondere Fig. 3 in Kombination mit Fig. 11 zeigt - in radialer Richtung durch eine in Draufsicht (Fig. 3) in Erstreckungsrichtung der Querrille 3 langgestreckte, dreieckförmige Schrägfläche 9d mit einer am innenseitigen Kantenabschnitt 12a liegende Basis und ferner durch zum Rillengrund 4 verlaufende Wandabschnitte 6a, 6b der Rillenwand 6 (vergl. Fig. 4) begrenzt ist, wobei der Wandabschnitt 6b der Endflanke 7 (Fig. 3) und der Wandabschnitt 6a dem seitlichen Rand der Bodenaufstandsfläche (Fig. 3: Linie L) zugewandt ist. Gemäß Fig. 3 geht die dreieckförmige Schrägfläche 9d von einem unmittelbar an den innenseitigen Kantenabschnitt 12b anschließenden, die Basis des Dreieckes bildenden Abschnittteil 12a' des außenseitigen Kantenabschnittes 12a aus, wobei der Abschnittteil 12a`, jeweils in Draufsicht betrachtet, eine in die axiale Richtung projizierte Länge c₄ von 50% bis 70%, insbesondere von 55% bis 65%, der Länge c_{QR} aufweist. Die Länge c₄ ist daher die Länge der Schrägfläche 9d an der Außenfläche 1a'. Die Schrägfläche 9d verläuft, im in Draufsicht in Umfangsrichtung ausgerichteten Querschnitt betrachtet, zur radialen Richtung unter einem Winkel λ (Fig. 6, vergl. Lage der Schnittlinie VI-VI in Fig. 3) von 40° bis 50°, wobei der Winkel λ konstant ist oder über die Erstreckung der Schrägfläche 9d um bis zu 3° variiert. Gemäß Fig. 11 weist der Vorsprung 9 am gegenseitigen Anschluss der Schrägfläche 9d und des Wandabschnittes 6a eine Vorsprungkante 9a, am gegenseitigen Anschluss der Schrägfläche 9d und des Wandabschnittes 6b eine Vorsprungkante 9b und am gegenseitigen Anschluss der Wandabschnitte 6a, 6b eine Vorsprungkante 9c auf. Die Vorsprungkante 9a weist, in Draufsicht betrachtet, eine in die axiale Richtung projizierte Länge c₅ (Fig. 3) von 70% bis 90%, insbesondere von zumindest 80%, der erwähnten Länge c₄ auf. Die Vorsprungkanten 9a, 9b schließen, in Draufsicht betrachtet, miteinander einen Winkel µ (Fig. 3) von 150° bis 160° ein. Die Schrägfläche 9d reicht am gegenseitigen Anschluss der Vorsprungkanten 9a, 9b in radialer Richtung am tiefsten in Querrille 3 hinein, wobei der gegenseitigen Anschluss der Vorsprungkanten 9a, 9b in einer in radialer Richtung ermittelten Tiefe t_{SF2max} von 0,7 mm bis 1,5 mm liegt. Die Ausgestaltung des Vorsprunges 9 ist ferner derart, dass die Querrille 3 an der Vorsprungkante 9c eine zwischen den Rillenwänden 5, 6 in Umfangsrichtung als kleinstmöglichen Abstand ermittelte Breite b_{QRmin} (Fig. 3) von 1,0 mm bis 4,0 mm, insbesondere von 1,5 mm bis 3,0 mm, aufweist. Bevorzugt ist die Breite b_{QRmin} derart auf die Breite b_{QRmax}' (Fig. 7) abgestimmt, dass die Breite b_{QRmin} maximal 50% der Breite b_{QRmax}' beträgt. Die Neigung der Vorsprungkante 9c relativ zur radialen Richtung ergibt sich aus dem bereits erwähnten Winkel κ (Fig. 5 bis Fig. 8) der Rillenwand 6 und der damit verbundenen etwaigen Neigung der Wandabschnitte 6a, 6b.

Gemäß Fig. 3 und Fig. 11 ist die an die Rillenwand 6 angrenzende Ausnehmung 10 durch eine Seitenfläche 10b, welche von innenseitigen Kantenabschnitt 12b ausgeht, und einen in Draufsicht in axialer Richtung langgezogen dreieckförmigen Boden 10a, welcher an seinem der nicht gezeigten Seitenwand näher befindlichen außenseitigen Bereich zum Rillengrund 4 (Fig. 11) und in seinem innenseitigen Bereich zur Rillenwand 6 (Fig. 4) verläuft, begrenzt. Der Boden 10a wird in Richtung Laufstreifeninnseite kontinuierlich schmäler und läuft am Wandabschnitt 6a aus. Der Boden 10a geht, im Längsschnitt durch die Querrille 3 betrachtet, an seinem außenseitigen Ende tangential (knickfrei) in die Außenfläche 1b' über (Fig. 4), verläuft, im in Umfangsrichtung verlaufenden Querschnitt betrachtet, parallel zur jeweiligen Außenfläche 1a', 1b' (Fig. 8, vergl. Lage der Linie VIII-VIII in Fig. 3) und weist an seinem laufstreifenaußenseitigen Ende eine in Umfangsrichtung ermittelte Breite b_{Bmax} (Fig. 3) von 1,5 mm bis 4,0 mm, insbesondere von 2,5 mm bis 3,5 mm, sowie an der Rillenwand 6, eine außenseitig entlang des Rillengrundes 4 fortgeführte Bodenkante 10a' auf. Gemäß Fig. 11 weist die Ausnehmung 10 eine entlang der Bodenkante 10a' senkrecht gegenüber dem Niveau der Außenfläche 1a' bzw. 1b' ermittelte Tiefe t_{A} auf, welche in Richtung Laufstreifenaußenseite kontinuierlich abnimmt und am laufstreifeninnenseitigen Ende einen maximalen Wert t_{Amax} von mindestens 2,0 mm und höchstens 60% der maximalen Tiefe t_{QRmax} (Fig. 4) der Querrille 3 aufweist. Bevorzugt beträgt der maximale Wert t_{Amax} 45% bis 55% der maximalen Tiefe t_{QRmax} (Fig. 4) der Querrille 3. Die Seitenfläche 10b ist eine in axialer Richtung langgezogen dreieckförmige Fläche, welche in entgegengesetzter Richtung zum Boden 10a ausläuft, daher in Richtung Laufstreifenaußenseite kontinuierlicher schmäler wird, und, im in Umfangsrichtung verlaufenden Querschnitt betrachtet, zur radialen Richtung unter einem Winkel ρ von 2° bis 6° verläuft (Fig. 8, vergl. Lage der Linie VIII-VIII in Fig. 3). Entsprechend der beschriebenen Ausgestaltung der Rillenkante 12 endet die Ausnehmung 10 im Rippeninnenabschnitt 1a im bereits erwähnten Abstand a₄ (Fig. 3) vom seitlichen Rand der Bodenaufstandsfläche (Linie L) und im Rippenaußenabschnitt 1b im bereits erwähnten, quer zur Umfangsrichtung am Niveau der Außenfläche 1b' ermittelten Abstand as vor dem Ende der Querrille 3.

Die Erfindung ist auf das beschriebene Ausführungsbeispiel nicht beschränkt.

Insbesondere kann die Schrägfläche 8a der fasenartigen Erweiterung 8 derart ausgeführt sein, dass sie sowohl vom außenseitigen Kantenabschnitt 11b als auch vom mittleren Kantenabschnitt 11c ausgeht, sodass keine an den mittleren Kantenabschnitt 11c anschließende Seitenfläche 8b vorhanden ist. Die oberflächliche Ausnehmung 10 ist optional. Der Rillengrund 4 kann sowohl im Längsschnitt durch die Querrille 3 betrachtet als im Querschnitt durch die Querrille 3 betrachtet eine von der beschriebenen Gestalt abweichende Gestalt aufweisen.

### Bezugszeichenliste

- 1: schulterseitige Profilrippe
- 1a: Rippeninnenabschnitt
- 1a': Außenfläche
- 1b: Rippenaußenabschnitt
- 1b': Außenfläche
- 1c: Rippenflanke
- 1c': radial äußere Übergangsrundung
- 2: schulterseitige Umfangsrille
- 3: Querrille
- 4: Rillengrund
- 4a: laufstreifeninnenseitiger Grundabschnitt
- 4b: laufstreifenaußenseitiger Grundabschnitt
- 5: Rillenwand
- 6: Rillenwand
- 6a: Wandabschnitt
- 6b: Wandabschnitt
- 7: Endflanke
- 8: fasenartige Erweiterung
- 8a: Schrägfläche
- 8a': radial innere Begrenzungskante
- 8b: Seitenfläche
- 9: Vorsprung
- 9a, 9b, 9c: Vorsprungkante
- 9d: Schrägfläche
- 10: oberflächliche Ausnehmung
- 10a: Boden
- 10a': Bodenkante

- 10b: Seitenfläche
- 11: Rillenkante
- 11a: innenseitiger Kantenabschnitt
- 11b: außenseitiger Kantenabschnitt
- 11c: mittlerer Kantenabschnitt
- 12: Rillenkante
- 12a: innenseitiger Kantenabschnitt
- 12a': Abschnittteil
- 12b: außenseitiger Kantenabschnitt
- a₁, a₂, a₃, a₄: Abstand
- bₐ, b_{SF1}: Breite
- b_{Bmax}: Breite
- b_{QRmi}: Breite
- b_{QRmax}: maximale Breite
- b_{QRmax}': maximale Rillenbreite
- b_{SF1max}: größter Wert
- c_{A}, c_{QR}, c₁, c₂, c₃, c₄, c₅, c₆: Länge
- FI: Fahrzeuginnenseite
- L: Linie (seitlicher Rand der Bodenaufstandsfläche)
- L₁, L₂: Linie
- S₉, S₁₀, S₁₁: Pfeil (Sichtrichtung)
- t_{A}: Tiefe
- t_{Amax}: maximaler Wert
- t_{GAmin}, t_{GAmax}: Tiefe
- t_{QRmax}: maximale Tiefe
- t_{QRmin}: minimale Tiefe
- t_{SF1max}, t_{SF2max}.: Tiefe
- T_{UR}: Profiltiefe
- Z₃: Detail
- α, β, γ, ε, η, θ, κ, λ, µ, π, ρ: Winkel
- δ, δ': stumpfer Winkel

## Patentansprüche

1. Fahrzeugluftreifen mit einem Laufstreifen mit zumindest einer durch eine Umfangsrille (2) begrenzten schulterseitigen Profilrippe (1) mit einem innerhalb der Bodenaufstandsfläche verlaufenden Rippeninnenabschnitt (1a), einem außerhalb der Bodenaufstandsfläche verlaufenden Rippenaußenabschnitt (1b) und in einem Abstand (a₁) vor der schulterseitigen Umfangsrille (2) endenden Querrillen (3), wobei jede Querrille (3) eine erste Rillenwand (5), eine dieser gegenüberliegende zweite Rillenwand (6) sowie eine erste und eine zweite Rillenkante (11, 12) aufweist,
wobei die Querrille (3) entlang der ersten Rillenkante (11), angrenzend an die erste Rillenwand (5), eine im Rippeninnenabschnitt (1a) und im Rippenaußenabschnitt (1b) verlaufende, in Erstreckungsrichtung der Querrille (3) langgestreckt dreieckförmige, fasenartige Erweiterung (8) aufweist und
wobei im Rippeninnenabschnitt (1a) eine von der zweiten Rillenkante (12) ausgehende, zur zweiten Rillenwand (6) verlaufende, in Erstreckungsrichtung der Querrille (3) langgestreckt dreieckförmige Schrägfläche (9d) ausgebildet ist,
dass sich die erste Rillenkante (11) aus einem innenseitigen Kantenabschnitt (11a), einem mittleren Kantenabschnitt (11c) und einem außenseitigen Kantenabschnitt (11b) zusammensetzt, wobei der mittlere Kantenabschnitt (11c) mit dem innenseitigen Kantenabschnitt (11a) an der der Querrille (3) abgewandten Seite einen ersten stumpfen Winkel (δ) und mit dem außenseitigen Kantenabschnitt (11b) einen an der der Querrille (3) zugewandten Seite einen zweiten stumpfen Winkel (δ') einschließt, wobei die fasenartige Erweiterung (8) entlang des außenseitigen Kantenabschnittes (11b) und des mittlere Kantenabschnittes (11c) ausgebildet ist und eine an der Querrille (3) liegende Dreieckbasis aufweist,
**dadurch gekennzeichnet,**
**dass** die Querrillen (3) mit einer an der Laufstreifenperipherie in Umfangsrichtung ermittelten maximalen Breite (b_{QRmax}) von 5,0 mm bis 9,0 mm ausgebildet sind, dass der außenseitige Kantenabschnitt (11b) abschnittsweise im Rippeninnenabschnitt (1a) und abschnittsweise im Rippenaußenabschnitt (1b) verlaufend ausgebildet ist, und
wobei die dreieckige Schrägfläche (9d) von einem die Dreieckbasis bildenden Abschnittteil (12a`) der zweiten Rillenkante (12) ausgeht und gemeinsam mit Wandabschnitten (6a, 6b) der zweiten Rillenwand (6) einen vom laufstreifeninnenseitigen Ende der Querrille (3) beabstandeten und die Querrille (3) lokal verengenden, keilförmigen Vorsprung (9) begrenzt.

2. Fahrzeugluftreifen nach Anspruch 1, **dadurch gekennzeichnet, dass** die Querrille (3) einen Rillengrund (4) mit einem laufstreifeninnenseitigen Grundabschnitt (4a) aufweist, welcher im Längsschnitt durch die Querrille (3) betrachtet, zur radialen Richtung unter einem Winkel (π) von 60° bis 80° verläuft und derart geneigt ist, dass die Tiefe der Querrille (3) über den laufstreifeninnenseitigen Grundabschnitt (4a) in Richtung Laufstreifeninnenseite kontinuierlich abnimmt, wobei der laufstreifeninnenseitige Grundabschnitt (4a) im Bereich des keilförmigen Vorsprunges (9) endet.

3. Fahrzeugluftreifen nach Anspruch 1 oder 2, **dadurch gekennzeichnet,**
**dass** der vom mittleren Kantenabschnitt (11c) und dem innenseitigen Kantenabschnitt (11a) an der der Querrille (3) abgewandten Seite eingeschlossene, erste stumpfe Winkel (δ) 150° bis 170° beträgt und/oder
**dass** der vom mittleren Kantenabschnitt (11c) und dem außenseitigen Kantenabschnitt (11b) an der der Querrille (3) zugewandten Seite eingeschlossene, zweite stumpfen Winkel (δ') 150° bis 170° beträgt.

4. Fahrzeugluftreifen nach einem der Ansprüche 1 bis 3, **dadurch gekennzeichnet, dass** der innenseitige Kantenabschnitt (11a), in Draufsicht betrachtet, zur axialen Richtung unter einem Winkel (β) von bis zu ± 2°, insbesondere von 0°, verläuft.

5. Fahrzeugluftreifen nach einem der Ansprüche 1 bis 4, **dadurch gekennzeichnet, dass** der mittlere Kantenabschnitt (11c), in Draufsicht betrachtet, zur axialen Richtung unter einem Winkel (γ) von 10° bis 20° verläuft.

6. Fahrzeugluftreifen nach einem der Ansprüche 1 bis 5, **dadurch gekennzeichnet, dass** der außenseitigen Kantenabschnitt (11b), in Draufsicht betrachtet, zur axialen Richtung unter einem Winkel (ε) von 0° bis 10° verläuft, wobei der außenseitige Kantenabschnitt (11b) zum mittleren Kantenabschnitt (11c) bezüglich der axialen Richtung vorzugsweise gegensinnig geneigt ist.

7. Fahrzeugluftreifen nach einem der Ansprüche 1 bis 6, **dadurch gekennzeichnet, dass** der innenseitige Kantenabschnitt (11a) eine in die axiale Richtung projizierte Länge (c₁) von 25% bis 40%, insbesondere von bis zu 35%, der innerhalb der Bodenaufstandsfläche am Niveau der Laufstreifenperipherie ermittelten, in die axiale Richtung projizierten Länge (c_{QR}) der Querrille (3) aufweist und
dass der mittlere Kantenabschnitt (11c) eine in die axiale Richtung projizierte Länge (c₂) von 25% bis 40%, insbesondere von zumindest 30%, der innerhalb der Bodenaufstandsfläche am Niveau der Laufstreifenperipherie ermittelten, in die axiale Richtung projizierten Länge (c_{QR}) der Querrille (3) aufweist.

8. Fahrzeugluftreifen nach einem der Ansprüche 1 bis 7, **dadurch gekennzeichnet,**
a) **dass** die fasenartige Erweiterung (8) von einer an den außenseitigen Kantenabschnitt (11b) anschließenden Schrägfläche (8a) und einer vom mittleren Kantenabschnitt (11c) ausgehenden Seitenfläche (8b) begrenzt ist, wobei die Schrägfläche (8a) entlang der Seitenfläche (8b) ausläuft und wobei die Seitenfläche (8b), im in Draufsicht in Umfangsrichtung ausgerichteten Querschnitt betrachtet, zur radialen Richtung unter einem Winkel (η) von vorzugsweise 2° bis 6°, insbesondere von 3° bis 5, verläuft, oder
b) **dass** die fasenartige Erweiterung (8) von einer sowohl an den außenseitigen Kantenabschnitt (11b) als auch an mittleren Kantenabschnitt (11c) anschließenden Schrägfläche (8a) begrenzt ist.

9. Fahrzeugluftreifen nach Anspruch 8, **dadurch gekennzeichnet, dass** bei Variante a) die Schrägfläche (8b) an ihrem sowohl an der Seitenfläche (8a) als auch an der ersten Rillenwand (5) liegendem Ende in eine in radialer Richtung ermittelte Tiefe (t_{SF1max}) von 1,0 mm bis 2,0 mm reicht.

10. Fahrzeugluftreifen nach Anspruch 8 oder 9, **dadurch gekennzeichnet**,
c) dass die Schrägfläche (8a), im in Umfangsrichtung ausgerichteten Querschnitt betrachtet, zur radialen Richtung unter einem Winkel (θ) von 20° bis 40°, insbesondere von 25° bis 35°, verläuft,
und/oder
d) dass die Schrägfläche (8a), im in Umfangsrichtung ausgerichteten Querschnitt betrachtet, eine Breite (b_{SF1}) aufweist, welche am gegenseitigen Anschluss des außenseitigen Kantenabschnittes (11b) und des mittleren Kantenabschnittes (11c) ihren größten Wert (b_{SF1max}) von 1,5 mm bis 3,0 mm, insbesondere von 2,0 mm bis 2,5 mm, aufweist.

11. Fahrzeugluftreifen nach einem der Ansprüche 1 bis 10, **dadurch gekennzeichnet, dass** der keilförmige Vorsprung (9) am gegenseitigen Anschluss der ihn mitbegrenzenden Wandabschnitte (6a, 6b) der zweiten Rillenwand (6) eine Vorsprungkante (9c) aufweist, an welcher die Querrille (3) eine zwischen den Rillenwänden (5, 6) in Umfangsrichtung als kleinstmöglichen Abstand ermittelte Breite (b_{QRmin}) von zumindest 1,0 mm, bevorzugt von bis zu 4,0 mm, besonders bevorzugt von 1,5 mm bis 3,0 mm, aufweist.

12. Fahrzeugluftreifen nach einem der Ansprüche 1 bis 11, **dadurch gekennzeichnet, dass** der keilförmige Vorsprung (9) am Anschluss seiner dreieckigen Schrägfläche (9d) an die ihn mitbegrenzenden Wandabschnitte (6a, 6b) jeweils eine Vorsprungkante (9a, 9b) aufweist, wobei diese Vorsprungkanten (9a, 9b), in Draufsicht betrachtet, miteinander einen Winkel (µ) von 150° bis 160° einschließen.

13. Fahrzeugluftreifen nach einem der Ansprüche 1 bis 12, **dadurch gekennzeichnet, dass** die dreieckige Schrägfläche (9d), welche gemeinsam mit den Wandabschnitten (6a, 6b) der zweiten Rillenwand (6) den keilförmigen Vorsprung (9) begrenzt,
- am die Dreieckbasis der Schrägfläche (9d) bildenden Abschnittteil (12a`) der zweiten Rillenkante (12) eine in die axiale Richtung projizierte Länge (c₄) von 50% bis 70%, insbesondere von 55% bis 65% der innerhalb der Bodenaufstandsfläche, am Niveau der Laufstreifenperipherie ermittelten, in die axiale Richtung projizierten Länge (c_{QR}) der Querrille (3) aufweist,
und/oder
- im in Umfangsrichtung ausgerichteten Querschnitt betrachtet, zur radialen Richtung unter einem Winkel (λ) von 40° bis 50° verläuft
und/oder
- in radialer Richtung bis in eine Tiefe (t_{SF2max}) von 0,7 mm bis 1,5 mm reicht.

14. Fahrzeugluftreifen nach Anspruch 12 und 13, **dadurch gekennzeichnet, dass** die Vorsprungkante (9a), welche der Vorsprung (9) an jenem Wandabschnitt (6a) aufweist, welcher dem seitlichen Rand der Bodenaufstandsfläche (Linie L) zugewandt ist, in Draufsicht eine in die axiale Richtung projizierte Länge (c₅) von 70% bis 90%, insbesondere von zumindest 80%, der die axiale Richtung projizierten Länge (c₄) der Schrägfläche (9d) aufweist.

15. Fahrzeugluftreifen nach einem der Ansprüche 1 bis 14, **dadurch gekennzeichnet, dass** die Querrille (3) eine an die zweite Rillenwand (6) angrenzende, zumindest Großteils im Rippenaußenabschnitt (1b) ausgebildete und zumindest bis zum Rippeninnenabschnitt (1a) reichende, in Erstreckungsrichtung der Querrille (3) langgestreckt dreieckförmige, oberflächliche Ausnehmung (10) aufweist, welche durch eine von der zweiten Rillenkante (12) ausgehende Seitenfläche (10b) und einen langgezogen dreieckförmigen, in Richtung Laufstreifeninnseite kontinuierlich schmäler werdenden, auslaufenden Boden (10a) mit einer Bodenkante (10a`) an der Rillenwand (6) begrenzt ist, wobei die Ausnehmung (10) eine entlang der Bodenkante (10a`) senkrecht gegenüber dem Niveau der Laufstreifenperiphere ermittelte, in Richtung Laufstreifenaußenseite abnehmende Tiefe (t_{A}) aufweist.

## Claims

1. Pneumatic vehicle tyre, having a tread having at least one shoulder-side profile rib (1) which is delimited by a circumferential groove (2), having a rib inner portion (1a) which runs within the ground contact area, a rib outer portion (1b) which runs outside the ground contact area, and transverse grooves (3) which terminate at a spacing (a₁) from the shoulder-side circumferential groove (2), wherein each transverse groove (3) has a first groove wall (5), a second groove wall (6) lying opposite the latter, and a first and a second groove edge (11, 12);
wherein the transverse groove (3) along the first groove edge (11), contiguous to the first groove wall (5), has a triangular chamfer-like widening (8) which runs in the rib inner portion (1a) and in the rib outer portion (1b) and is elongate in the direction of extent of the transverse groove (3);
wherein formed in the rib inner portion (1a) is a triangular sloping surface (9d) which proceeds from the second groove edge (12), runs to the second groove wall (6), and is elongate in the direction of extent of the transverse groove (3);
that the first groove edge (11) is made up of an inner edge portion (11a), a middle edge portion (11c) and an outer edge portion (11b), with the middle edge portion (11c) forming a first obtuse angle (δ) with the inner edge portion (11a) on the side facing away from the transverse groove (3) and forming a second obtuse angle (δ') with the outer edge portion (11b) on the side facing the transverse groove (3), the chamfer-like widening (8) being formed along the outer edge portion (11b) and the middle edge portion (11c) and having a triangular base lying on the transverse groove (3),
**characterized in that**
the transverse grooves (3) are formed with a maximum width (b_{QRmax}) of 5.0 mm to 9.0 mm, determined in the circumferential direction on the tread periphery, that the outer edge portion (11b) is formed so as to run in portions in the rib inner portion (1a) and in portions in the rib outer portion (1b); and
wherein the triangular sloping surface (9d) proceeds from a segment (12a') of the second groove edge (12) that forms the triangular base and, together with wall portions (6a, 6b) of the second groove wall (6), delimits a wedge-shaped projection (9) that is at a spacing from the end of the transverse groove (3) on the inner side of the tread and locally narrows the transverse groove (3).

2. Pneumatic vehicle tyre according to Claim 1, **characterized in that** the transverse groove (3) has a groove base (4) having an inner tread-side base portion (4a) which, when viewed in the longitudinal section through the transverse groove (3) runs at an angle (π) of 60° to 80° in relation to the radial direction and is inclined in such a manner that the depth of the transverse groove (3) continuously decreases across the inner tread-side base portion (4a) in the direction of the tread inside, wherein the inner tread-side base portion (4a) ends in the region of the wedge-shaped projection (9).

3. Pneumatic vehicle tyre according to Claim 1 or 2, **characterized in that** the first obtuse angle (δ) enclosed by the middle edge portion (11c) and the inner edge portion (11a) on that side that faces away from the transverse groove (3) is 150° to 170°;
and/or
the second obtuse angle (δ') enclosed by the middle edge portion (11c) and the outer edge portion (11b) on that side that faces the transverse groove (3) is 150° to 170°.

4. Pneumatic vehicle tyre according to one of Claims 1 to 3, **characterized in that** the inner edge portion (11a) in plan view runs at an angle (β) of up to ± 2°, in particular of 0°, in relation to the axial direction.

5. Pneumatic vehicle tyre according to one of Claims 1 to 4, **characterized in that** the middle edge portion (11c) in plan view runs at an angle (γ) of 10° to 20° in relation to the axial direction.

6. Pneumatic vehicle tyre according to one of Claims 1 to 5, **characterized in that** the outer edge portion (11b) in plan view runs at an angle (ε) of 0° to 10° in relation to the axial direction, wherein the outer edge portion (11b) in terms of the axial direction is preferably inclined in the opposite direction to the middle edge portion (11c).

7. Pneumatic vehicle tyre according to one of Claims 1 to 6, **characterized in that** the inner edge portion (11a) has a length (c₁), projected in the axial direction, of 25% to 40%, in particular of up to 35%, of the length (c_{QR}), projected in the axial direction, of the transverse groove (3) determined within the ground contact area at the level of the tread periphery; and
**in that** the middle edge portion (11c) has a length (c₂), projected in the axial direction, of 25% to 40%, in particular of at least 30%, of the length (c_{QR}), projected in the axial direction, of the transverse groove (3) determined within the ground contact area at the level of the tread periphery.

8. Pneumatic vehicle tyre according to one of Claims 1 to 7, **characterized in that**
a) the chamfer-like widening (8) is delimited by a sloping surface (8a) which adjoins the outer edge portion (11b), and by a lateral surface (8b) which proceeds from the middle edge portion (11c), wherein the sloping surface (8a) runs out along the lateral surface (8b), and wherein the lateral surface (8b), in plan view of the cross section oriented in the circumferential direction, runs at an angle (η) of preferably 2° to 6°, in particular of 3° to 5, in relation to the radial direction; or
b) **in that** the chamfer-like widening (8) is delimited by a sloping surface (8a) which adjoins the outer edge portion (11b) as well as the middle edge portion (11c).

9. Pneumatic vehicle tyre according to Claim 8, **characterized in that** in variant a) the sloping surface (8b) on its end lying on the lateral surface (8a) as well as on its end lying on the first groove wall (5) reaches a depth (t_{SF1max}), determined in the radial direction, of 1.0 mm to 2.0 mm.

10. Pneumatic vehicle tyre according to Claim 8 or 9, **characterized in that**
c) the sloping surface (8a), when viewed in the cross section oriented in the circumferential direction, runs at an angle (θ) of 20° to 40°, in particular of 25° to 35°, in relation to the radial direction;
and/or
d) the sloping surface (8a), when viewed in the cross section oriented in the circumferential direction, has a width (b_{SF1}) which has its highest value (b_{SF1max}) of 1.5 mm to 3.0 mm, in particular of 2.0 mm to 2.5 mm at the mutual connection of the outer edge portion (11b) and of the middle edge portion (11c).

11. Pneumatic vehicle tyre according to one of Claims 1 to 10, **characterized in that** the wedge-shaped projection (9) at the mutual connection of the wall portions (6a, 6b) of the second groove wall (6) that participate in delimiting said wedge-shaped projection has a projection edge (9c) on which the transverse groove (3) has a width (b_{QRmin}), determined as the smallest possible spacing in the circumferential direction between the groove walls (5, 6), of at least 1.0 mm, preferably of up to 4.0 mm, particularly preferably of 1.5 mm to 3.0 mm.

12. Pneumatic vehicle tyre according to one of Claims 1 to 11, **characterized in that** the wedge-shaped projection (9), at the connection of its triangular sloping surface (9a) to the wall portions (6a, 6b) that participate in delimiting said wedge-shaped projection, has in each case one projection edge (9a, 9b), wherein these projection edges (9a, 9b) in plan view conjointly enclose an angle (µ) of 150° to 160°.

13. Pneumatic vehicle tyre according to one of Claims 1 to 12, **characterized in that** the triangular sloping surface (9d), which conjointly with the wall portions (6a, 6b) of the second groove wall (6) delimits the wedge-shaped projection (9),
- on the segment (12a`) of the second groove edge (12) that forms the triangular base of the sloping surface (9d), has a length (c₄), projected in the axial direction, of 50% to 70%, in particular of 55% to 65%, of the length (c_{QR}), projected in the axial direction, of the transverse groove (3) determined within the ground contact area at the level of the tread periphery;
and/or
- when viewed in the cross section oriented in the circumferential direction, runs at an angle (λ) of 40° to 50° in relation to the radial direction;
and/or
- in the radial direction reaches a depth (t_{SF2max}) of up to 0.7 mm to 1.5 mm.

14. Pneumatic vehicle tyre according to Claims 12 and 13, **characterized in that** the projection edge (9a) which the projection (9) has on that wall portion (6a) that faces the lateral periphery of the ground contact area (line L), in plan view has a length (c₅), projected in the axial direction, of 70% to 90%, in particular of at least 80%, of the length (c₄), projected in the axial direction, of the sloping surface (9d).

15. Pneumatic vehicle tyre according to one of Claims 1 to 14, **characterized in that** the transverse groove (3) has a triangular, superficial clearance (10) which is contiguous to the second groove wall (6), is at least largely formed in the rib outer portion (1b), reaches at least up to the rib inner portion (1a) and is elongate in the direction of extent of the transverse groove (3), and which is delimited by a lateral surface (10b) which proceeds from the second groove edge (12) and by an elongate triangular base (10a) that becomes continuously narrower and runs out in the direction of the tread inside and has a base edge (10a`) on the groove wall (6), wherein the clearance (10) has a depth (t_{A}) which is determined along the base edge (10a`), perpendicularly to the level of the tread periphery, and decreases in the direction of the tread outside.

## Revendications

1. Pneumatique pour véhicule comprenant une bande de roulement avec au moins une nervure profilée (1) du côté d'un épaulement, délimitée par une rainure circonférentielle (2), avec une section intérieure (1a) de nervure s'étendant à l'intérieur de la surface de contact avec le sol, une section extérieure (1b) de nervure s'étendant à l'extérieur de la surface de contact avec le sol et des rainures transversales (3) se terminant à une distance (a1) avant la rainure circonférentielle (2) côté épaulement, chaque rainure transversale (3) présentant une première paroi de rainure (5), une deuxième paroi de rainure (6) opposée à celle-ci ainsi qu'une première et une deuxième arête de rainure (11, 12),
la rainure transversale (3) présentant le long de la première arête de rainure (11), adjacente à la première paroi de rainure (5), un élargissement (8) en forme de biseau, s'étendant dans la section intérieure (1a) de nervure et dans la section extérieure (1b) de nervure, de forme triangulaire allongée dans la direction d'extension de la rainure transversale (3), et
une surface inclinée (9d) partant de la deuxième arête de rainure (12), s'étendant vers la deuxième paroi de rainure (6) et de forme triangulaire allongée dans la direction d'extension de la rainure transversale (3) étant formée dans la section intérieure de la nervure (1a),
en ce que la première arête de rainure (11) se compose d'une partie d'arête (11a) côté intérieur, d'une partie d'arête centrale (11c) et d'une partie d'arête (11b) côté extérieur, la partie d'arête médiane (11c) formant un premier angle obtus (δ) avec la partie d'arête intérieure (11a) sur le côté opposé à la rainure transversale (3) et formant un deuxième angle obtus (δ') avec la partie d'arête extérieure (11b) sur le côté tourné vers la rainure transversale (3), l'élargissement (8) en forme de biseau étant formé le long de la partie d'arête extérieure (11b) et de la partie d'arête centrale (11c) et a une base triangulaire située au niveau de la rainure transversale (3),
**caractérisé**
**en ce que** les rainures transversales (3) sont réalisées avec une largeur maximale (b_{QRmax}), déterminée à la périphérie de la bande de roulement dans la direction circonférentielle, allant de 5,0 mm à 9,0 mm, en ce que la partie d'arête (11b) côté extérieur est réalisée en s'étendant par sections dans la section intérieure (1a) de nervure et par sections dans la section extérieure (1b) de nervure, et
la surface oblique triangulaire (9d) partant d'une partie de section (12a'), formant la base du triangle, du deuxième bord de rainure (12) et délimitant, conjointement avec des sections de paroi (6a, 6b) de la deuxième paroi de rainure (6), une saillie (9) en forme de coin, espacée de l'extrémité de la rainure transversale (3) située du côté intérieur de la bande de roulement et rétrécissant localement la rainure transversale (3).

2. Pneumatique pour véhicule selon la revendication 1, **caractérisé en ce que** la rainure transversale (3) présente un fond de rainure (4) avec une section de base (4a) côté intérieur de la bande de roulement qui, vue en coupe longitudinale à travers la rainure transversale (3), s'étend par rapport à la direction radiale selon un angle (π) allant de 60° à 80° et est inclinée de telle sorte, que la profondeur de la rainure transversale (3) diminue continuellement sur la section de base (4a) côté intérieur de la bande de roulement en direction du côté intérieur de la bande de roulement, la section de base (4a) côté intérieur de la bande de roulement se terminant dans la zone de la saillie (9) en forme de coin.

3. Pneumatique pour véhicule selon la revendication 1 ou la revendication 2, **caractérisé**
**en ce que** le premier angle obtus (δ) formé par la partie d'arête centrale (11c) et la partie d'arête intérieure (11a) sur le côté opposé à la rainure transversale (3), est compris entre 150° à 170°,
et/ou
**en ce que** le deuxième angle obtus (δ') formé par la partie d'arête centrale (11c) et la partie d'arête extérieure (11b) sur le côté tourné vers la rainure transversale (3) est compris entre 150° et 170°.

4. Pneumatique pour véhicule selon l'une des revendications 1 à 3, **caractérisé en ce que** la partie d'arête côté intérieur (11a), vue de dessus, s'étend par rapport à la direction axiale selon un angle (β) allant jusqu'à ± 2°, en particulier de 0°.

5. Pneumatique pour véhicule selon l'une des revendications 1 à 4, **caractérisé en ce que** la partie d'arête centrale (11c), vue de dessus, s'étend par rapport à la direction axiale selon un angle (γ) allant de 10° à 20°.

6. Pneumatique pour véhicule selon l'une des revendications 1 à 5, **caractérisé en ce que** la partie d'arête extérieure (11b), vue de dessus, s'étend par rapport à la direction axiale selon un angle (ε) allant de 0° à 10°, la partie d'arête extérieure (11b) étant inclinée par rapport à la partie d'arête centrale (11c), de préférence en sens inverse par rapport à la direction axiale.

7. Pneumatique pour véhicule selon l'une des revendications 1 à 6, **caractérisé en ce que** la partie d'arête côté intérieur (11a) présente une longueur (c₁) projetée dans la direction axiale allant de 25% à 40%, en particulier jusqu'à 35%, de la longueur (CQR) de la rainure transversale (3) projetée dans la direction axiale, déterminée à l'intérieur de la surface de contact avec le sol au niveau de la périphérie de la bande de roulement, et
**en ce que** la partie d'arête centrale (11c) présente une longueur (C2) projetée dans la direction axiale allant de 25% à 40%, en particulier d'au moins 30%, de la longueur (CQR) de la rainure transversale (3) projetée dans la direction axiale, déterminée à l'intérieur de la surface de contact avec le sol au niveau de la périphérie de la bande de roulement.

8. Pneumatique pour véhicule selon l'une des revendications 1 à 7, **caractérisé**
a) **en ce que** l'élargissement (8) en forme de biseau est délimité par une surface inclinée (8a) se raccordant à la partie d'arête (11b) côté extérieur et par une surface latérale (8b) partant de la partie d'arête centrale (11c), la surface inclinée (8a) se terminant le long de la surface latérale (8b) et la surface latérale (8b), vue en coupe transversale orientée dans la direction circonférentielle en vue de dessus, s'étendant par rapport à la direction radiale selon un angle (η) allant de préférence de 2° à 6°, en particulier de 3° à 5°, ou
b) **en ce que** l'élargissement (8) en forme de biseau est délimité par une surface inclinée (8a) se raccordant tant à la partie d'arête (11b) côté extérieur qu'à la partie d'arête centrale (11c).

9. Pneumatique pour véhicule selon la revendication 8, **caractérisé en ce que**, dans la variante a), la surface inclinée (8b) s'étend, à son extrémité située à la fois sur la surface latérale (8a) et sur la première paroi de rainure (5), jusqu'à une profondeur (t_{SF1max}) déterminée dans la direction radiale, allant de 1,0 mm à 2,0 mm.

10. Pneumatique pour véhicule selon la revendication 8 ou la revendication 9, caractérisé
c) en ce que la surface inclinée (8a), vue en coupe transversale orientée dans la direction circonférentielle, s'étend par rapport à la direction radiale selon un angle (θ) allant de 20° à 40°, notamment de 25° à 35°,
et/ou
d) en ce que la surface inclinée (8a), vue en coupe transversale orientée dans la direction circonférentielle, présente une largeur (bSF1) qui, au niveau du raccordement mutuel de la partie d'arête (11b) côté extérieur et de la partie d'arête centrale (11c), présente sa valeur maximale (bSF1max) allant de 1,5 mm à 3,0 mm, en particulier de 2,0 mm à 2,5 mm.

11. Pneumatique pour véhicule selon l'une des revendications 1 à 10, **caractérisé en ce que** la saillie en forme de coin (9) présente, au niveau du raccordement mutuel des sections de paroi (6a, 6b) de la deuxième paroi de rainure (6) qui la délimitent conjointement, une arête saillante (9c), au niveau duquel la rainure transversale (3) présente une largeur (b_{QRmin}), déterminée entre les parois de la rainure (5, 6) dans la direction circonférentielle comme étant la plus petite distance possible, d'au moins 1,0 mm, de préférence de jusqu'à 4,0 mm, de manière particulièrement préférée allant de 1,5 mm à 3,0 mm.

12. Pneumatique pour véhicule selon l'une des revendications 1 à 11, **caractérisé en ce que** la saillie en forme de coin (9) présente une arête de saillie (9a, 9b) à la jonction de sa surface oblique triangulaire (9d) avec les sections de paroi (6a, 6b) qui la délimitent conjointement, ces arêtes de saillie (9a, 9b) formant entre elles, en vue de dessus, un angle (µ) allant de 150° à 160°.

13. Pneumatique pour véhicule selon l'une quelconque des revendications 1 à 12, **caractérisé en ce que** la surface triangulaire inclinée (9d) qui délimite, conjointement avec les portions de paroi (6a, 6b) de la deuxième paroi de rainure (6), la saillie en forme de coin (9),
- présente, sur la partie de section (12a') formant la base triangulaire de la surface inclinée (9d) du deuxième bord de rainure (12), une longueur (C4) projetée dans la direction axiale allant de 50 % à 70 %, en particulier de 55 % à 65 % de la longueur (CQR) de la rainure transversale (3) projetée dans la direction axiale, déterminée à l'intérieur de la surface de contact avec le sol, au niveau de la périphérie de la bande de roulement,
et/ou
- s'étend, vu en coupe transversale orientée dans la direction circonférentielle, selon un angle (λ) allant de 40° à 50° par rapport à la direction radiale
et/ou
- s'étend, dans la direction radiale, jusqu'à une profondeur (t_{SF2max}) allant de 0,7 mm à 1,5 mm.

14. Pneumatique pour véhicule selon les revendications 12 et 13, **caractérisé en ce que** l'arête de saillie (9a) que présente la saillie (9) sur la partie de paroi (6a) qui fait face au bord latéral de la surface de contact avec le sol (ligne L) a, en vue de dessus, une longueur (C5) projetée dans la direction axiale allant de 70% à 90%, en particulier d'au moins 80%, de la longueur (C4) projetée dans la direction axiale de la surface inclinée (9d).

15. Pneumatique pour véhicule selon l'une des revendications 1 à 14, **caractérisé en ce que** la rainure transversale (3) présente un évidement superficiel (10) adjacent à la deuxième paroi de rainure (6), formé au moins en grande partie dans la partie extérieure de la nervure (1b) et s'étendant au moins jusqu'à la partie intérieure de la nervure (1a), de forme triangulaire allongée dans la direction d'extension de la rainure transversale (3), qui est délimité par une surface latérale (10b) partant du deuxième bord de rainure (12) et par un fond (10a) de forme triangulaire allongée, se rétrécissant continuellement en direction du côté intérieur de la bande de roulement, avec un bord de fond (10a') sur la paroi de rainure (6), l'évidement (10) présentant une profondeur (tA) déterminée le long du bord de fond (10a') perpendiculairement par rapport au niveau de la périphérie de la bande de roulement et diminuant en direction du côté extérieur de la bande de roulement.
